# EUROPÄISCHE PATENTANMELDUNG

(11) **EP 1 389 568 A2**
(43) Veröffentlichungstag der Anmeldung: **18.02.2004**
(21) Anmeldenummer: 03017512.9
(22) Anmeldetag: 05.08.2003
(51) Int. Cl.: B60R 21/16, B60R 21/26

(54) **Seitengassack und Seitengassack-Modul für eine Fahrzeuginsassen-Schutzeinrichtung**

(30) Priorität: 16.08.2002 DE 20212599 U
(71) Anmelder: TRW Occupant Restraint Systems GmbH & Co. KG, 73553 Alfdorf (DE)
(72) Erfinder: Strukelj, Andrej, 73527 Schwäbisch Gmünd (DE); Steinbrück, Olaf, 06712 Kretzschau (DE); Scherr, Jürgen, 73550 Waldstetten (DE)
(74) Vertreter: Strass, Jürgen

(57) **Zusammenfassung**

Ein Seitengassack für ein Fahrzeuginsassen-Rückhaltesystem ist in seinem aufblasbaren Volumen durch einen äußeren Gassackmantel (16) begrenzt. Im Einblasbereich des Gassacks (14) innerhalb des Gassackmantels (16) ist ein aufblasbarer Beutel (18) vorgesehen.

## Beschreibung

Die Erfindung betrifft einen Seitengassack für ein Fahrzeuginsassen-Rückhaltesystem, dessen aufblasbares Volumen durch einen äußeren Gassackmantel begrenzt ist, und ein Seitengassack-Modul für eine Fahrzeuginsassen-Schutzeinrichtung.

Bei Seitengassäcken, insbesondere bei Seitengassäcken, die zusammengefaltet in einem im Bereich der Dachkante des Fahrzeugs angeordneten Gassack-Modul untergebracht sind, können beim Befüllen des Gassacks Beschädigungen an dessen Einblasmund auftreten, wenn das Faltenpaket nicht schnell genug auseinandergeschoben wird. Die Beschädigungen sind auf die anfänglich sehr hohen Temperaturen des Gases, das von einem Gasgenerator bereitgestellt wird, und den hohen Gasstrom zurückzuführen.

Die Erfindung schafft einen Seitengassack, der insbesondere im Anfangsstadium der Entfaltung ein schnelles Auseinanderschieben des gefalteten Gassackpakets gewährleistet.

Gemäß der Erfindung ist bei einem Seitengassack der eingangs genannten Art im Einblasbereich des Gassacks innerhalb des Gassackmantels ein aufblasbarer Beutel vorgesehen. Der Beutel dient als anfängliche Entfaltungshilfe für den zusammengelegten Gassackmantel. Durch das Aufblasen und das dadurch bedingte Aufblähen des Beutels, wird das den Beutel umgebende Faltenpaket des Gassackmantels auf effektive Weise in kürzester Zeit auseinandergeschoben.

Gemäß einer bevorzugten Ausführungsform weist der Beutel eine längliche, schlauchförmige Gestalt auf mit einem ersten Ende, das als Einblasöffnung ausgebildet ist, und einem zweiten Ende, das als Ausströmöffnung ausgebildet ist. Die Einblasöffnung kann direkt mit einem Einblasstutzen verbunden werden, über den das von einem Gasgenerator bereitgestellte Gas zugeführt wird. Somit wird das Gas zunächst in den Beutel geleitet, bevor er durch die Ausströmöffnung in das Volumen des Gassackmantels einströmt und den Gassack vollständig entfaltet.

Eine gezielte Beeinflussung des Aufblasverhaltens des Gassacks wird dadurch erreicht, daß der Beutel mit einer Reißnaht versehen ist, die bei einem vorbestimmten Innendruck des Beutels aufreißt und dadurch eine Ausströmöffnung freigibt. So kann gewährleistet werden, daß das heiße Gas zunächst im Beutel aufgefangen wird, bevor es in abgekühlter Form durch die vorher verschlossene Ausströmöffnung in das Voumen des Gassackmantels gelangt. Mögliche Risse im Einblasbereichs des Gassacks oder ein Durchbrennen werden dadurch verhindert.

Die Erfindung sieht ferner ein Seitengassack-Modul mit wenigstens einem erfindungsgemäßen Seitengassack vor. Vorzugsweise ist der Beutel des Seitengassacks direkt mit einem Einblasstutzen des Moduls verbunden.

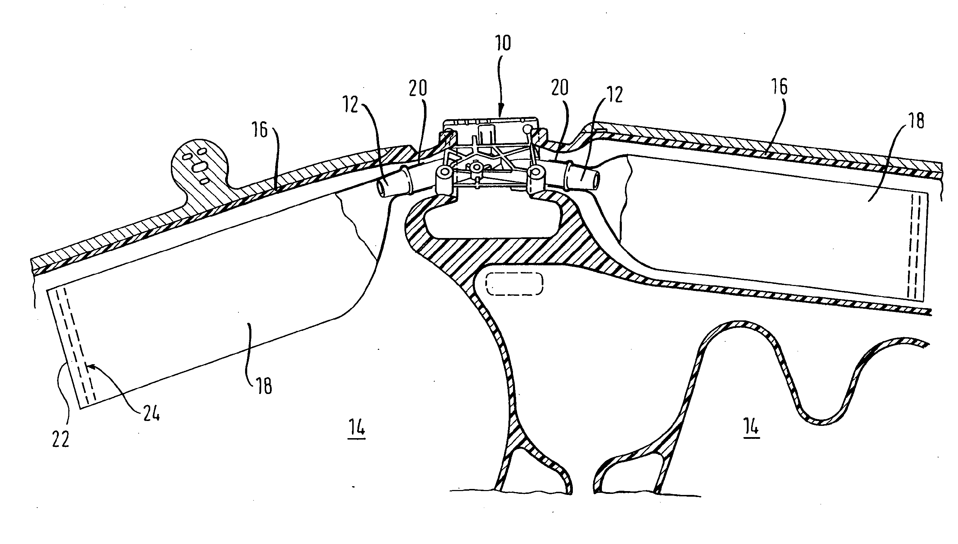

Weitere Merkmale und Vorteile der Erfindung ergeben sich aus der folgenden Beschreibung und aus der beigefügten Zeichnung, auf die bezug genommen wird. In der Zeichnung zeigt die einzige Figur eine Querschnittsansicht eines erfindungsgemäßen Seitengassack-Moduls mit zwei erfindungsgemäßen Seitengassäcken im entfalteten Zustand.

In der Figur ist ein sogenanntes Mittel-Seitengassack-Modul 10 dargestellt, das in einem Fahrzeug an der Dachkante im Bereich der B-Säule angeordnet wird. Das Modul 10 umfaßt zwei Einblasstutzen 12, über die zwei gleichartige Seitengassäcke 14 mit Gas befüllt werden. Beide Gassäcke 14 sind aus einem äußeren Gassackmantel 16 und einem innerhalb des Mantels 16 im Einblasbereich des Gassacks 14 vorgesehenen länglichen, schlauchförmigen Beutel 18 gebildet. Das erste Ende 20 des Beutels 18 ist über den zugeordneten Einblasstutzen 12 gestülpt und an diesem befestigt, während das zweite Ende 22 durch eine Reißnaht 24 verschlossen ist, die eine oder mehrere Abströmöffnungen aufweisen kann.

Nach der Aktivierung des Gasgenerators (nicht gezeigt) wird das von diesem bereitgestellte heiße Gas unter hohem Druck über den jeweiligen Einblasstutzen 12 zunächst den innerhalb des Gassackmantels 16 angeordneten schlauchförmigen Beuteln 18 zugeführt. Die Beutel 18 nehmen also den ersten Impuls des aus den Einblasstutzen 12 austretenden Gases auf und blähen sich auf. Dadurch werden die Faltenpakete der Gassackmäntel 16 rasch auseinandergeschoben.

Die Reißnaht 24 ist so dimensioniert, daß sie nach dem Aufblähen des Beutels 18 bei einem vorbestimmten Druck aufreißt und so eine dem Einblasstutzen 12 entgegengesetzte Öffnung des Beutels 18 freigibt. Nach der Öffnung der Reißnaht 24 kann das inzwischen etwas abgekühlte Gas in das durch den (bereits teilentfalteten) Gassackmantel 16 zur Verfügung stehende Volumen einströmen.

Bei einer anderen Realisierung sind nicht zwei getrennte Gassäcke 14, sondern nur ein Gassack vorgesehen. Die beiden Einblasstutzen 12 können in diesem Fall dazu dienen, verschiedene Kammern des Gassacks zu befüllen.

Das Material für den Beutel 18 ist entsprechend den jeweiligen Anforderungen zu wählen.

## Patentansprüche

1. Seitengassack für ein Fahrzeuginsassen-Rückhaltesystem, dessen aufblasbares Volumen durch einen äußeren Gassackmantel (16) begrenzt ist, **dadurch gekennzeichnet, daß** im Einblasbereich des Gassacks (14) innerhalb des Gassackmantels (16) ein aufblasbarer Beutel (18) vorgesehen ist.

2. Seitengassack nach Anspruch 1, **dadurch gekennzeichnet, daß** der Beutel (18) eine längliche, schlauchförmige Gestalt hat mit einem ersten Ende (20), das als Einblasöffnung ausgebildet ist, und einem zweiten Ende (22), das als Ausströmöffnung ausgebildet ist.

3. Seitengassack nach Anspruch 1 oder 2, **dadurch gekennzeichnet, daß** der Beutel (18) mit einer Reißnaht (24) versehen ist, die bei einem vorbestimmten Innendruck des Beutels (18) aufreißt und dadurch eine Ausströmöffnung freigibt.

4. Seitengassack nach Anspruch 3, **dadurch gekennzeichnet, daß** die Reißnaht (24) wenigstens eine Abströmöffnung aufweist.

5. Seitengassack-Modul für ein Fahrzeuginsassen-Rückhaltesystem, **dadurch gekennzeichnet, daß** das Modul (10) wenigstens einen Seitengassack (14) nach einem der vorhergehenden Ansprüche aufweist.

6. Seitengassack-Modul nach Anspruch 5, **dadurch gekennzeichnet, daß** der Beutel (18) des Seitengassacks (14) direkt mit einem Einblasstutzen (12) des Moduls (10) verbunden ist.
